# EUROPÄISCHE PATENTANMELDUNG

(11) **EP 2 805 829 A1**
(43) Veröffentlichungstag der Anmeldung: **26.11.2014**
(21) Anmeldenummer: 14164628.1
(22) Anmeldetag: 14.04.2014
(51) Int. Cl.: B41M 5/26, C03B 32/02, C03C 4/00, C03C 4/02, C03C 4/08, C03C 4/10, C03C 10/00, C03C 23/00, F24C 7/08, F24C 15/10, H05B 6/12

(54) **Glaskeramik-Kochfläche mit lokal erhöhter Transmission und Verfahren zur Herstellung einer solchen Glaskeramik-Kochfläche**

(30) Priorität: 15.04.2013 DE 102013103776; 24.09.2013 DE 102013110566
(71) Anmelder: Schott AG, 55122 Mainz (DE)
(72) Erfinder: HOPPE, Bernd, 55218 Ingelheim (DE); Spier, Martin, 55124 Mainz (DE); Seiler, Daniela, 55232 Alzey (DE); Weiss, Evelin, 55131 Mainz (DE)
(74) Vertreter: Blumbach Zinngrebe

(57) **Zusammenfassung**

Die Erfindung betrifft eine volumengefärbte, monolithische Glaskeramik-Kochfläche, welche einen ersten Bereich (15) aufweist, in welchem die Färbung der Glaskeramik sich von einem zweiten, benachbarten Bereich (16) unterscheidet, so dass der Absorptionskoeffizient des ersten Bereichs (15) kleiner als der Absorptionskoeffizient eines zweiten, benachbarten Bereichs (16) und damit die integrale Lichttransmission im sichtbaren Spektralbereich des ersten Bereichs (15) höher ist, als die integrale Lichttransmission des zweiten, benachbarten Bereichs (16), wobei die Lichtstreuung in der Glaskeramik des ersten Bereichs (15) höchstens um absolut 20 Prozent, vorzugsweise höchstens um absolut 5 Prozent gegenüber der Lichtstreuung in der Glaskeramik des zweiten Bereichs (16) erhöht ist.

## Beschreibung

Die Erfindung betrifft eine Glaskeramik-Kochfläche, die in einem lokal begrenzten Bereich eine gegenüber benachbarten Bereichen eine erhöhte Transmission für sichtbares Licht aufweist, sowie ein Verfahren zur lokal begrenzt flächigen oder auch vollflächigen Veränderung der Absorptionseigenschaften glaskeramischer Materialien über zumindest einen Teil der Dicke und/oder des Volumens des Ausgangsmaterials durch eine Behandlung mit elektromagnetischer Strahlung, so dass die Transmission des monolithischen Ausgangsmaterials in gewünschtem Maße verändert wird. Im Speziellen betrifft die Erfindung Glaskeramik-Kochflächen, die mittels des erfindungsgemäßen Verfahrens herstellbar sind.

Für eine lokale Veränderung der Transmission von Bauteilen aus Glaskeramik sind bisher vier verschiedene Varianten möglich:
Zum einen kann durch das Fügen von zwei verschiedenen Materialien mit unterschiedlicher Transmission ein Bauteil erzeugt werden, welches partiell eine andere Transmission aufweist. Dabei können alle Fügeverfahren wie Löten,
Schweißen und Kleben zum Einsatz kommen. Nachteilig ist dabei, dass hierbei zwei verschiedene Materialien mit unterschiedlicher Transmission benötigt werden. Diese müssen aufwändig einzeln hergestellt werden, wobei die Einstellung einer bestimmten und unterschiedlichen Transmission eine Herausforderung darstellt oder in vielen Fällen überhaupt nicht dargestellt werden kann. Die zwei verschiedenen Materialien können zudem unterschiedliche mechanische, physikalische und chemische Eigenschaften aufweisen. Dies kann im späteren Einsatzfall nachteilig sein in Bezug auf Temperaturwechselbeständigkeit, chemische Beständigkeit und mechanische Bruchfestigkeit. Außerdem ist die Fügenaht auch mit anderen physikalischen und chemischen Eigenschaften behaftet und kann sich nachteilig auf die Bauteileigenschaften auswirken. Zudem ist die Fügenaht meist optisch störend oder bildet eine Bruchausgangskante.
Außerdem ist das Einfügen von geschlossenen Flächen in ein großes Bauteil oft sehr schwierig, da allseitig gefügt werden muss und Spaltmaße schwer einzuhalten sind; auch Kräfte auf die Fügenaht zur Steigerung der Haftvermittlung können nicht aufgebracht werden.

Zum Anderen kann eine lokale Änderung der Transmission durch lokale Beschichtung erfolgen. Eine solche Lösung wird beispielsweise in der WO 2012/001300 A1 vorgeschlagen. Zwar wird hier nur noch ein Material im Gegensatz zum Fügeverfahren, aber dafür zusätzlich ein Beschichtungsstoff benötigt, welcher bestimmte geforderte Transmissionseigenschaften erfüllen muss. Um eine lokal höhere Transmission zu erzielen, werden die Bereiche des Bauteils beschichtet, die eine geringere Transmission haben sollen. Voraussetzung dafür ist, dass die Grundtransmission des gesamten Bauteils so hoch ist wie die höchste geforderte Transmission im fertigen Produkt. In der Praxis kann dies ebenfalls zu einem erhöhten Aufwand führen, da gegebenenfalls die Glaszusammensetzung zu ändern ist.

Auch der Aufwand für die partielle Beschichtung ist nicht zu unterschätzen, da in irgendeiner Weise maskiert werden muss. Nachteilig am Beschichtungsverfahren ist außerdem, dass eine geeignete Beschichtung zu finden ist, welche sowohl auf dem Bauteil ausreichend haftet als auch alle späteren Einsatzbedingungen des Bauteils ohne Schädigung übersteht.

Zusätzlich schafft die Beschichtung eine neue Oberfläche auf dem Bauteil mit anderen chemischen und physikalischen Eigenschaften. Bei einer äußeren Beschichtung eines Produktes kann es zu Kratzern oder anderweitigen Veränderungen und Beschädigungen kommen. Außerdem trägt eine Beschichtung immer auf der Oberfläche auf, was oft hinsichtlich der Haptik, Optik, Kratzanfälligkeit oder Reibung unerwünscht ist.

Auch ist zum dritten ein Verfahren zur Laserbeschriftung von keramischen Materialien, Glasuren, keramischen Gläsern und Gläsern aus der EP 0233146 B1 bekannt. Dabei werden dem zu beschriftenden Material als strahlungsempfindlicher Zusatzstoff anorganische Pigmentpartikel in Form eines "keramischen Farbkörpers" beigemischt, welcher durch die Laserbestrahlung eine andere Farbe annimmt. Da solche Pigmentpartikel in Gläsern und Glaskeramiken nur während der Schmelze zugeführt werden könnten, würden diese mit aufgeschmolzen und der Effekt wäre nicht mehr gegeben. Nur bei Keramiken, die aus Pulvern zusammengesintert werden, ist ein solches Verfahren denkbar. Auch ist ein gepulster und fokussierter Laserstrahl, welcher oberflächlich einwirkt, zwingend erforderlich, da die Keramiken nicht transparent sind. Die optimale, zur Bestrahlung auszuwählende Wellenlänge bei diesem Verfahren ist dabei diejenige, bei welcher der strahlungsempfindliche Zusatzstoff am meisten, das zu beschriftende anorganische Material dagegen am wenigsten absorbiert. Voraussetzung ist daher eine lokal unterschiedliche Absorption des Ausgangsmaterials, es müssen also lokale Absorptionspunkte in der Keramik enthalten sein, die zu einer lokal unterschiedlichen Absorption (und damit einem anderen Farbeindruck) des zu beschriftenden Ausgangsmaterials führen. Auch ist die Eindringtiefe dieser Markierung üblicherweise nicht größer als ca. 1 mm, da Keramiken im Allgemeinen opak sind.

Der Erfindung liegt die Aufgabe zu Grunde, für volumengefärbte Glaskeramik-Kochflächen die Anzeigenfähigkeit zu verbessern, mit anderen Worten also die Möglichkeit zu schaffen, das Licht von unter einem Glaskeramik-Kochfeld angeordneten Anzeigeelemente durch die Glaskeramik hindurchzuleiten, selbst wenn die Glaskeramik so volumengefärt ist, dass diese für den Betrachter dunkel gefärbt erscheint. Dunkel gefärbte Glaskeramik-Platten werden für Kochflächen im Allgemeinen verwendet, um die unter dem Kochfeld angeordnete Heizelemente und den weiteren Unterbau des Herds optisch zu verbergen. Andererseits besteht der Wunsch, auch Anzeigeelemente durch die Glaskeramik hindurch leuchten zu lassen. Die Erfindung löst diese an sich widersprüchlichen Vorgaben in überraschend einfacher Weise.

Mit der Erfindung kann auch auf die Beimischung von Färbekörpern zum monolithischen Glaskeramik-Bauteil, etwa in Form von anorganischen Pigmenten verzichtet werden. Auch werden keine zusätzlichen Beschichtungen oder Fügungen benötigt, um eine lokale Transmissionsänderung zu erzeugen.

Auch sollen lokale Streuzentren im Material entfallen können, die durch lokale Zerstörung oder Veränderung der Struktur des Ausgangsmaterials erzeugt werden.

Der Einsatz eines teuren gepulsten und hochfokussierten Lasers, dessen Fokuspunkt präzise durch das Material gefahren werden muss und der nur ein extrem kleines Volumen behandeln kann, ist ebenfalls mit der Erfindung nicht mehr notwendig.

Die Nachteile einer Fügenaht, nämlich das optische Erscheinungsbild und das Vorhandensein einer oder mehrerer zusätzlicher Bauteilkanten, die zum Bruch führen können, sollen mit der Erfindung vermieden werden.

Auch sollen in einfacher Art und Weise geschlossene Flächen innerhalb einer größeren Fläche transmittiv verändert werden können, ohne ein anderes Material dafür einfügen zu müssen. Insbesondere entfällt auch die Herstellung mehrerer unterschiedlicher Ausgangsmaterialien mit unterschiedlicher Transmission.

Außerdem sollen Beschichtungen nicht mehr notwendig sein, um die Transmission lokal zu beeinflussen. Damit kann die Suche nach einem Beschichtungsstoff und einem passenden Beschichtungsverfahren entfallen. Andererseits können aber auch gegebenenfalls Beschichtungen zum Einsatz kommen, um die Transmission und/oder Farbe anzupassen oder um andere Eigenschaften, wie etwa eine Entspiegelung bereitzustellen. Es kann auch das Beimischen von irgendwelchen partikelförmigen Zusatzstoffen entfallen, die zum Ausgangsmaterial passen und sich chemisch mit diesem vertragen müssen. Auch ein heterogener Farbeindruck des Ausgangsmaterials durch das beigemischte Pigment kann so vermieden werden.

Im Allgemeinen werden für die Erfindung im sichtbaren Wellenlängenbereich (380nm - 780nm) eingefärbte Glaskeramiken genutzt. Typischerweise führt eine solche Färbung im sichtbaren Spektralbereich auch zu einer im Infrarot-Bereich vorhandenen Färbung.

Die Änderung der Transmission erfolgt erfindungsgemäß dabei durch die lokale und zeitlich begrenzte Einwirkung von elektromagnetischer Strahlung, wie z.B. Laserstrahlung eines Dioden-Laser mit 1 µm Wellenlänge, wobei die Strahlung zu einer lokalen Aufheizung des Materials führt.

Um eine lokale Transmissionsänderung der Glaskeramik zu erzielen, wird die Temperatur der Glaskeramik erhöht, bis eine Transmissionsänderung eintritt. Im Anschluss wird eine vorzugsweise sehr schnelle Abkühlung durchgeführt. Die Erwärmung löst entsprechende physikalisch-chemische Reaktionen aus und/oder steigert die Elektronen- und Ionenmobilität im Ausgangsmaterial.

Demgemäß sieht die Erfindung ein Verfahren zur Herstellung einer Glaskeramik-Kochfläche mit lokal veränderter Transmission vor, bei welchem
- eine mit färbenden Metallionen volumengefärbte Glaskeramikplatte bereitgestellt und
- lokal begrenzt auf einen Bereich der Oberfläche der Glaskeramikplatte elektromagnetische Strahlung gerichtet wird, welche im Volumen der Glaskeramikplatte absorbiert wird, und
- wobei die Leistungsdichte der elektromagnetischen Strahlung so gewählt wird, dass sich der bestrahlte Bereich der Glaskeramikplatte aufheizt, wobei mindestens so lange aufgeheizt wird, bis im Volumen des erhitzten Bereichs die Transmission des Glaskeramikmaterials in zumindest einem spektralen Bereich innerhalb des sichtbaren Spektralbereichs zwischen 380 Nanometern und 780 Nanometern Lichtwellenlänge erhöht wird, und wobei
- die Einstrahlung der elektromagnetischen Strahlung nach der Aufheizung beendet wird und der bestrahlte Bereich abkühlt. Typischerweise liegt die Temperatur, bei welcher die Transmissionssteigerung auftritt, oberhalb der Temperatur, bei welcher die Viskosität der Glaskeramik bei 10¹⁴ dPa·s liegt. Vorzugsweise wird nicht bis zum Erweichungspunkt, bei welchem die Viskosität einen Wert von 10^{7,6} dPa·s aufweist, aufgeheizt, um Formveränderungen zu vermeiden.

Unter einem volumengefärbten Glas oder einer Glaskeramik wird im Sinne der Erfindung ein Material verstanden, bei welchem die Farbzentren oder färbenden Ionen im Material verteilt sind. Diese sind also nicht wie bei Pigmenten lokal in Form von färbenden Kristalliten konzentriert. Entsprechend einem Farbstoff sind die farbgebenden Ionen oder Farbzentren also im Glas oder der Glaskeramik gelöst, während Pigmente im Material dispergiert sind. Eine Volumenfärbung beeinflusst demgemäß zwar die Transmission, nicht aber die Streuung, wohingegen Pigmente selbst streuende Partikel darstellen. Gegebenenfalls zusätzlich vorhandene Pigmente werden aber nicht ausgeschlossen.

Mit diesem Verfahren wird eine volumengefärbte, monolithische Glaskeramik-Kochfläche erhalten, welche einen ersten Bereich aufweist, in welchem die Färbung der Glaskeramik sich von einem zweiten, benachbarten Bereich unterscheidet, so dass der Absorptionskoeffizient des ersten Bereichs kleiner als der Absorptionskoeffizient eines zweiten, benachbarten Bereichs und damit die integrale Lichttransmission im sichtbaren Spektralbereich des ersten Bereichs höher ist, als die integrale Lichttransmission des zweiten, benachbarten Bereichs, wobei die Lichtstreuung in der Glaskeramik des ersten Bereichs höchstens um absolut 20 Prozent, vorzugsweise höchstens um absolut 10 Prozent, besonders bevorzugt höchstens um absolut 5%, insbesondere bevorzugt höchstens um absolut 1% gegenüber der Lichtstreuung in der Glaskeramik des zweiten Bereichs erhöht ist. Die Lichtstreuung in der Glaskeramik des ersten Bereichs ist also im Wesentlichen gleich zur Lichtstreuung des zweiten, benachbarten Bereichs mit unveränderter Lichttransmission. Unter die Obergrenze einer höchstens um absolut 20 Prozent höheren Lichtstreuung fällt auch der Fall, dass die Lichtstreuung im ersten Bereich kleiner ist, als im zweiten Bereich. Mit der allenfalls geringfügig erhöhten Lichtstreuung tritt diese nicht als sichtbarer Effekt hervor. Die Lichtstreuung ist der Anteil der eingestrahlten Gesamtintensität abzüglich des direkt transmittierten Lichts, der Fresnel-Reflexion und Absorption. Die absolute, in Prozent angegebene Erhöhung der Streuung bezieht sich auf den Anteil des gestreuten Lichts bei der Transmission eines Lichtstrahls. Beträgt der Anteil der gestreuten Lichtintensität im zweiten Bereich beispielsweise 3% der Gesamtintensität, so bedeutet eine Erhöhung um absolut 5% im ersten Bereich dann ein Anteil der gestreuten Lichtintensität im ersten Bereich von 3% + 5% = 8%. Mit anderen Worten wird mit der absoluten, in Prozent angegebenen Erhöhung der Streuung der Anstieg in Prozentpunkten angegeben. Die Begriffe der Transmission, Streuung, Absorption und Remission, wie sie im Sinne der Erfindung verwendet werden, entsprechen den Definitionen gemäß DIN 5036-1 und können mit den Messvorschriften gemäß ISO 15368 bestimmt werden.

Unter der integralen Lichttransmission wird die über einen Wellenlängenbereich, wie etwa den sichtbaren Spektralbereich zwischen 380 und 780 Nanometern Wellenlänge gemittelte spektrale Lichttransmission verstanden. Die spektrale Lichttransmission ist die Lichttransmission bei einer bestimmten Wellenlänge. Sofern nicht von der spektralen Lichttransmission gesprochen wird, ist mit dem Begriff der Lichttransmission im Sinne dieser Beschreibung eine integrale Lichttransmission zu verstehen. Der Absorptionskoeffizient des ersten Bereichs muss selbstverständlich nicht über den gesamten Spektralbereich des Lichts inklusive des infraroten und ultravioletten Bereichs kleiner als der Absorptionskoeffizient eines zweiten, benachbarten Bereichs sein. Vielmehr ist der Absorptionskoeffizient des ersten Bereichs im sichtbaren Spektralbereich im Mittel so erniedrigt, dass die integrale Lichttransmission im sichtbaren Spektralbereich höher ist. Würde nur die Oberfläche des Materials mit dem erfindungsgemäßen Verfahren behandelt, wäre der Effekt der Absorptionsänderung und damit der Transmissionsänderung über das ganze Volumen gesehen oft nur sehr klein und meist nicht ausreichend. Deshalb ist es durch und mit dem erfindungsgemäßen Verfahren durch die Auswahl einer Wellenlänge der Strahlung derart, dass diese im Volumen des Materials absorbiert wird, möglich, nicht nur die Oberfläche sondern simultan zumindest einen bestimmten Bereich des Volumens des Glases aufzuheizen und zu verändern, um den Effekt groß genug zu machen, so dass er dem der Anwendung gewünschten Maße entspricht und um die Oberfläche des Materials während der Behandlung nicht zu überhitzen.

Wie bereits gesagt, wird für die lokale Aufheizung des Glaskeramikmaterials vorzugsweise ein Laser verwendet. Mit einem Laserstrahl kann die Strahlungsleistung lokal eng begrenzt im Material eingebracht werden.

Ein weiteres wichtiges Merkmal der Erfindung ist die Tatsache, dass die Wellenlänge der Einstrahlung nicht der Wellenlänge des erzielten Effektes, also der Wellenlänge, bei welcher die Transmissionsänderung auftritt, entsprechen muss. Bei der vorliegenden Erfindung ist es also möglich, beispielsweise im infraroten Wellenlängenbereich bei 1µm Wellenlänge einzustrahlen, weil im Glas oder der Glaskeramik in diesem Wellenlängenbereich eine Absorptionsbande vorhanden ist. Der resultierende Effekt kann aber beispielsweise im sichtbaren Bereich zwischen 380nm und 780nm liegen und eine Änderung der Transmission bei einer oder mehreren Wellenlängen in diesem Bereich durch physikalisch-chemische Reaktionen der im Glas vorhandenen Elemente und Verbindungen hervorrufen. Dies ist aus der Tatsache geschuldet, dass die eingestrahlte Energie zwar nur mit bestimmten Elementen des Glases oder der Glaskeramik wechselwirkt aber Auswirkungen auf die gesamte Struktur der Glaskeramik hat.

Um eine lokale Transmissionsänderung zu erzielen, wird also dazu auch lokal im Volumen eine Temperaturerhöhung hervorgerufen. Dies erfolgt durch elektromagnetische Strahlung in einem Wellenlängenbereich, in welchem die Glaskeramik eine Teildurchlässigkeit für die auftreffende elektromagnetische Strahlung hat. Damit wird nicht nur oberflächlich sondern über die gesamte Dicke oder in einem Teilvolumen des Glaskeramikelements Energie eingebracht. Ist das Produkt aus Strahlungsdichte und Absorption hoch genug, dann kommt es zu einer (lokalen) schockartigen Temperaturerhöhung und damit zu einer Veränderung der Transmission. Ist das Produkt zu groß, wird nur die Oberfläche erwärmt und damit überhitzt und der Effekt im Volumen wird nicht groß genug, ohne das Material zu schädigen. Ist das Produkt zu klein, dann wird zu langsam erwärmt und der Effekt tritt entweder nicht auf oder ist nicht mehr lokal eindeutig zu begrenzen, d.h. verschmiert.

Gemäß einer Weiterbildung der Erfindung wird daher die Strahlungsdichte, beziehungsweise Leistungsdichte der elektromagnetischen Strahlung und/oder der Absorptionskoeffizient α des Glaskeramikmaterials so gewählt, dass das Produkt P der Leistungsdichte und des Absorptionskoeffizienten α mindestens P = 0,25 (W/mm³)·(1/mm) beträgt. Der Absorptionskoeffizient sollte dabei zur Vermeidung einer nur oberflächlichen Erwärmung gemäß noch einer Weiterbildung der Erfindung höchstens 2/d betragen, wobei d die Dicke des Glaskeramikelements bezeichnet.

Der Effekt der Änderung des Absorptionsverhaltens und damit resultierend der Transmission resultiert wahrscheinlich aus Redox-Reaktionen von färbenden Elementen im Material oder durch Auflösung von zuvor eingebrachten Farbzentren (z.B. durch Solarisationseffekte oder andere extrem kurzwellige Strahlungsenergie). Durch die Wahl der Strahlungsquelle und die Form der Einbringung der Energie kann der Bereich der Transmissionsänderung von punktförmig über linienförmig bis zu flächig sein. Dabei meint punktförmig nur die geometrische Abbildung des Laserstrahls auf der Oberfläche, jedoch nicht die Fokussierung in Form eines räumlichen Punktes. Über die Dicke des Materials kann also die Form ein Zylinder oder ein Kegel mit spitzem Winkel sein. Bei einer punktförmigen Einbringung der Energie kann durch Bewegung der Strahlungsquelle oder Bewegung des Bauteils der Bereich der Transmissionsänderung eine beliebige Form annehmen, z.B. Buchstaben, Zeichen oder auch Dreiecke, Vierecke oder beliebige andere geometrische Formen. Die Abmaße der Bereiche mit Transmissionsänderung können von Durchmesser 0,1mm bis zu einer Fläche von mehreren Quadratmetern variieren. Die Höhe der Transmissionsänderung kann additiv zum ursprünglichen Transmissionsgrad um absolut 0,1% bis um mehr als absolut 50% höher sein. Vorzugsweise wird, insbesondere bei dunkel gefärbten Glaskeramiken, die Transmission im sichtbaren Spektralbereich im ersten Bereich gegenüber dem zweiten, benachbarten Bereich um mindestens einen Faktor 2 erhöht. Wie bereits oben erwähnt, wird eine schnelle Abkühlung bevorzugt. Dies ist günstig, um die Ionenmobilität nach der Aufheizung schnell zu reduzieren und damit den Effekt der Farbänderung einzufrieren oder zu verhindern, dass bei der Aufheizung erfolgte Redox-Reaktionen sich wieder umkehren. In Weiterbildung der Erfindung ist daher vorgesehen, dass die Glaskeramik nach der Erwärmung mit einer Abkühlrate von mindestens 1 K pro Sekunde, vorzugsweise zumindest 5 K pro Sekunde, besonders bevorzugt zumindest 10 K pro Sekunde zumindest innerhalb eines Temperaturbereichs von der Maximaltemperatur bis 100 K unterhalb der Maximaltemperatur abgekühlt wird.

Gemäß einer Ausführungsform der Erfindung wird die Erwärmung Glaskeramik mittels der elektromagnetischen Strahlung so durchgeführt, dass die Oberfläche der Glaskeramikplatte kühler bleibt, als unter der Oberfläche liegende Bereiche des Volumens. Das Volumen erreicht so zeitlich vor den Oberflächen die nötige Prozesstemperatur. Der Prozess kann vor einem Erweichen/Ausweichen der Oberflächen beendet werden. Auf diese Weise bleiben die Oberflächen starr und es entstehen keine bleibende plastische Verformung und keine oder betragsmäßig geringere Zugspannungen.

Eine Möglichkeit hierzu ist, wenn auch während der Aufheizung durch die elektromagnetische Strahlung eine Kühlung der Oberfläche der Glaskeramikplatte durchgeführt wird. Insbesondere wird dabei eine Kühlung verstanden, die einen größeren Wärmetransport bewirkt, als die ansonsten vorhandenen Wärmeverluste durch Wärmestrahlung und Wärmeleitung. Eine Kühlung kann insbesondere durch Kontakt der Oberfläche mit einem wärmeabführenden Fluid, beziehungsweise einem Kühlfluid erfolgen. Besonders bevorzugt wird dabei ein über die Oberfläche fließender Fluidstrom. Die Kühlung kann auf einer Seite der Glaskeramikplatte oder auch auf beiden Seiten erfolgen. Geeignet ist beispielsweise Wasser, oder ein Wasser-Ethanol-Gemisch. Ein solches Gemisch absorbiert Infrarotstrahlung weniger als Wasser.

Mit einer solchen Kühlung während des Aufheizens können gegebenenfalls Oberflächenverwerfungen oder eine Volumenexpansion vermieden oder zumindest reduziert werden. Es können gemäß noch einer Weiterbildung der Erfindung Druckspannungszonen im oberflächennahen Bereich erzeugt werden oder es wird das Ausbilden von höheren Zugspannungen verhindert, da die Dehnung an der Oberfläche reduziert oder vermieden wird.

Gemäß noch einer Weiterbildung der Erfindung kann ein thermischer Nachbehandlungsschritt nach der Abkühlung vorgesehen werden. Mit einem solchen Nachbehandlungsschritt können durch die Aufheizung zuvor induzierte Zugspannungen wieder abgebaut werden. Auch ist eine individuelle Feineinstellung der erzeugten Transmission durch einen thermischen Nachbehandlungsschritt möglich.

Mögliche Varianten der thermischen Nachbehandlung sind:
- Ein zweiter Aufheizschritt mittels elektromagnetischer Strahlung, vorzugsweise mittels eines Lasers, der das Volumen auf eine Entspannungstemperatur aufheizt und dort hält.
- Ein zweiter Aufheizschritt mittels elektromagnetischer Strahlung, vorzugsweise mittels eines Lasers, der nur die Oberfläche/n aufheizt und dort Spannungen abbaut. Dies kann günstig sein, da oberflächennahe Spannungen wesentlich kritischer sind als Spannungen im Volumen. Um eine solche mehr oberflächliche Erwärmung zu erzielen, kann für den zweiten Aufheizschritt elektromagnetische Strahlung verwendet werden, die andere Wellenlängen aufweist als die elektromagnetische Strahlung des ersten Aufheizschritts.

Ein thermisches Nachwärmen und Entspannen im konventionellen Ofen, beispielsweise in einem Kühlofen.

Als Strahlungsquellen können UV-Strahlungsquellen, IR Strahler mit Wolframwendel, Laserquellen wie z.B. Dioden-Laser, Faser-Laser oder auch andere Strahlungsquellen zum Einsatz kommen. Die Wahl der richtigen Strahlungsquelle richtet sich nach dem Absorptionsvermögen des zu behandelnden Glases im Bereich der Wellenlänge der Strahlungsquelle. Für keramisierte Ceran-Glaskeramiken eignen sich z.B. Diodenlaser mit einer Wellenlänge im Bereich von 1µm. Bei dieser Wellenlänge beträgt die Transmission einer 4mm dicken Ceranplatte zwischen 50% und 80%, so dass genügend viel Strahlung durch die gesamte Dicke der Platte dringt, um diese homogen über die Dicke der Platte an der Stelle der Energieeinbringung aufzuheizen. Bei einer genügend hohen Leistung kann somit innerhalb weniger Sekunden eine Temperatur an der Stelle der Energieeinbringung von größer 700 °C erzielt werden.

Allgemein wird bevorzugt, dass die Glaskeramik mit einer Temperaturänderungsrate von mindestens 250 K pro Minute aufgeheizt wird. Die schnelle Aufheizung stellt sicher, dass die Bereiche mit veränderter Farbgebung scharf abgegrenzt werden können, beziehungsweise scharfe Konturen aufweisen. Auch wird eine unerwünschte Keimbildung oder bei Gläsern eine Kristallisation unterdrückt.

Geht man davon aus, dass der Effekt der Änderung des Absorptionskoeffizienten, beziehungsweise der Farbänderung alleine durch die Temperaturanhebung im Glaskeramikmaterial erfolgt, wären prinzipiell neben einer Strahlungsaufheizung auch andere Arten des Energieeintrags, wie etwa eine lokale Aufheizung mit einem Gasbrenner denkbar, um eine Farbänderung zu erzielen. Allerdings wird die erfindungsgemäße schnelle Aufheizung mit einer in das Material eindringenden elektromagnetischen Strahlung bevorzugt, um eine schnelle Aufheizung des Volumens unter der bestrahlten Oberfläche zu erzielen. Damit können scharfe Konturen der Bereiche mit geänderter Farbgebung erreicht werden. Bei einer nur oberflächliche Bestrahlung breitet sich die Wärme seitlich entlang der Oberfläche im Wesentlichen genau so schnell aus, wie in Richtung von der Oberfläche weg in das Volumen hinein. Wird also bei nur oberflächlicher Erhitzung eine Farbänderung des Volumens unterhalb der Oberfläche oder insbesondere sogar des gesamten Bereichs zwischen zwei Seitenflächen einer Glaskeramikplatte hergestellt, ergeben sich entsprechend unscharfe Kanten des farbgeänderten Bereiches.

Nach Abkühlung der Platte auf Raumtemperatur ist an der Stelle der Energieeinbringung die Transmission höher als vor der Strahlungsbehandlung. Der Bereich der Energieeinbringung kann sowohl über die Formung der Einstrahlung der Energie erfolgen als auch über eine zusätzliche Maskierung der zu behandelnden Platte, so dass nicht zu verändernde Teile des Glases wirksam vor dem Auftreffen von Strahlung geschützt werden.

Der Vorteil dieses Verfahrens gegenüber dem Stand der Technik ist die Tatsache, dass ein monolithisches Bauteil verwendet werden kann und Anpassungen der Zusammensetzung, Fügungen oder Beschichtungen nicht notwendig sind. Das Verfahren ist sehr schnell durchführbar (im Sekundenbereich), hoch flexibel und extrem gut anpassbar an verschiedenste Geometrien und Anwendungen. Auch dreidimensional verformte Bauteile können behandelt werden.

Das Verfahren gemäß der Erfindung eignet sich sehr gut dazu, die Färbung eines mit Vanadiumoxid volumengefärbten Glaskeramik-Artikels lokal abzuschwächen. Demgemäß wird hierbei in dem lokalen Bereich die Transmission im sichtbaren Spektralbereich zwischen 380 Nanometern und 780 Nanometern durch die Erhitzung angehoben. Gemäß einer bevorzugten Ausführungsform der Erfindung ist daher ein mit Vanadiumoxid volumengefärbtes Glaskeramikelement vorgesehen, bei welchem im ersten, erfindungsgemäß behandelten Bereich die integrale Lichttransmission im sichtbaren Spektralbereich gegenüber einem benachbarten zweiten, nicht behandelten Bereich angehoben ist

Auf diese Weise können in einfacher Weise beispielsweise Fenster mit höherer Transmission in einem ansonsten dunkel erscheinenden Glaskeramik-Kochfeld erzeugt werden. Unter einem solchen Fenster kann dann eine Anzeige angebracht werden, welche für den Betrachter gut sichtbar leuchtet. Unter einem Fenster als besonders bevorzugter Form eines mit dem erfindungsgemäßen Verfahren hergestellten aufgehellten Bereichs wird ein Bereich verstanden, der von mindestens drei Seiten oder zu mindestens 50% seines Umfangs von benachbarten, nicht aufgehellten zweiten Bereichen umgeben ist. Vorzugsweise ist der erste Bereich vollständig von zweiten Bereichen, beziehungsweise nicht aufgehelltem Glaskeramikmaterial umgeben.

Allgemein ist es auch sinnvoll, nicht den überwiegenden Anteil der Fläche der Glaskeramik-Kochfläche aufzuhellen, da es in diesem Fall einfacher wäre, eine entsprechend hellere Glaskeramik bereitzustellen und dann lokal, beispielsweise mittels einer Beschichtung einen begrenzten Bereich dunkler zu machen. Gemäß einer Ausführungsform der Erfindung ist daher vorgesehen, dass der Flächenanteil des oder der ersten Bereiche an einer Seite der Glaskeramik-Kochfläche zusammengenommen höchstens ein Drittel der Fläche dieser Seite einnimmt. Sind mehrere aufgehellte Bereiche vorhanden, so gilt gemäß dieser Ausführungsform der Erfindung vorzugsweise, dass die summierte Fläche aller dieser Bereiche höchstens ein Drittel der Fläche einer Seite der Glaskeramik-Kochfläche einnimmt.

Die Erfindung wird nachfolgend anhand von Ausführungsbeispielen und der beigeschlossenen Figuren näher erläutert. Dabei verweisen in den Figuren gleiche Bezugszeichen auf gleiche oder entsprechende Elemente.

Es zeigen:
Fig. 1 eine Vorrichtung zur Durchführung des erfindungsgemäßen Verfahrens,
Fig. 2 Röntgenbeugungsspektren an einem aufgehellten und einem unveränderten Bereich einer volumengefärbten Glaskeramik,
Fig. 3 den spektralen Transmissionsgrad eines behandelten und eines unbehandelten Bereichs einer Glaskeramik-Kochfläche,
Fig. 4 ein Glaskeramik-Kochfeld mit einer erfindungsgemäßen Glaskeramik-Kochfläche,
Fig. 5 ein Glaskeramik-Kochfeld mit einer Flachfacette,
Fig. 6 den Absorptionskoeffizient eines behandelten und eines unbehandelten Bereichs einer Glaskeramik-Kochfläche in Abhängigkeit von der Wellenlänge.

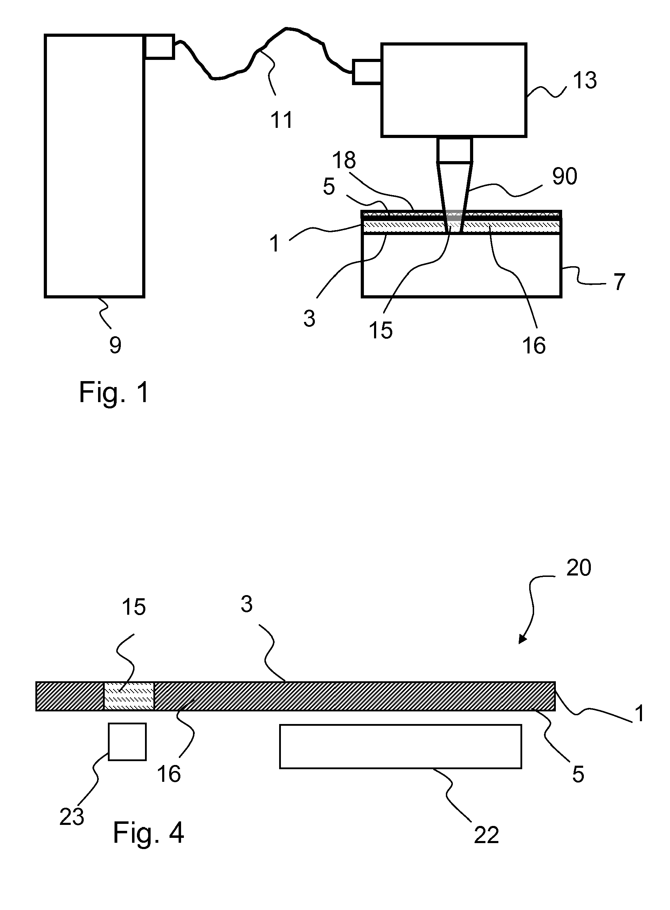

Das erfindungsgemäße Verfahren zur Herstellung einer Glaskeramik-Kochfläche mit lokal veränderter Transmission wird anhand von Fig. 1 näher erläutert. Es wird eine Glaskeramik-Kochfläche 1 in Form einer Glaskeramikplatte 1 mit einer ersten Seite 3 und einer zweiten Seite 5 und den Abmessungen 50 mm x 50 mm und 4 mm Dicke bereitgestellt. Die Glaskeramik-Kochfläche 1 kann, wie dies üblich ist, einseitig genoppt ausgeführt sein. Insbesondere ist die Glaskeramik-Kochfläche volumengefärbt durch färbende Metallionen. Solche Metallionen können beispielsweise Mangan, Eisen-, Seltenerd-, wie insbesondere Cer-, Chrom-, Nickel-, Kobalt- oder Vanadiumionen sein. Die färbende Wirkung dieser Ionen kann dabei auch von einer Wechselwirkung mit weiteren Bestandteilen der Glaskeramik abhängig sein. So kann die Färbung durch Wechselwirkung mit anderen Metallionen verstärkt oder umgekehrt auch abgeschwächt werden. Mangan- und Eisenionen zeigen beispielsweise eine Wechselwirkung mit Zinn und/oder Titan, weshalb vorzugsweise Mangan- oder Eisenoxid als Färbemittel, vorzugsweise in Verbindung mit Zinnoxid und/oder Titanoxid, in der Zusammensetzung eingesetzt wird. Färbende Ionen seltener Erden, wie insbesondere Cer-Ionen wechselwirken mit Ionen von Chrom, Nickel und Kobalt. Vorzugsweise werden Oxide seltener Erden als Färbemittel daher in Verbindung mit Oxiden der vorgenannten Metalle in der Glaskeramik-Zusammensetzung eingesetzt. Auch bei Vanadium kann eine Wechselwirkung mit Zinn, Antimon oder Titan vermutet werden.

Allgemein, ohne Beschränkung auf die speziellen Ausführungsbeispiele weist die Glaskeramik Ionen zumindest eines der folgenden Metalle oder Kombinationen von Ionen der folgenden Metalle auf:
- Vanadium, insbesondere zusammen mit Zinn und/oder Titan
- Seltene Erden, insbesondere Cer, vorzugsweise zusammen mit Chrom und/oder Nickel und/oder Kobalt,
- Mangan, vorzugsweise zusammen mit Zinn und/oder Titan,
- Eisen, vorzugsweise zusammen mit Zinn und/oder Titan.

Vanadiumoxid stellt ein sehr starkes Färbemittel dar. Eine starke Färbung erfolgt dabei im Allgemeinen erst bei der Keramisierung. Es hat sich gezeigt, dass mittels der Erfindung eine Volumenfärbung durch Vanadiumoxid wieder zumindest teilweise rückgängig gemacht werden kann. Um für den Fall einer mit Vanadiumoxid gefärbten Glaskeramik einen deutlich sichtbaren Effekt zu erzielen, ist daher ohne Beschränkung auf das Ausführungsbeispiel gemäß einer Ausführungsform der Erfindung vorgesehen, dass die Glaskeramik mindestens 0,005, vorzugsweise mindestens 0,01 Gewichtsprozent Vanadiumoxid enthält. Dies verursacht eine hinreichend starke Färbung und entsprechend einen deutliche Transmissionsänderung im lokal aufgehellten Bereich 15.

Die Glaskeramik-Kochfläche 1 wird auf einer im Schlickerguss hergestellten Siliziumoxid-Keramikunterlage 7 mit 100 mm x 100 mm und 30mm Dicke platziert. Die auf der Siliziumoxid-Keramikunterlage 7 aufliegende erste Seite 3 ist beispielsweise die glatte Oberseite der Glaskeramik-Kochfläche 1. Die nach oben weisende zweite Seite 5 ist dann die genoppte Unterseite. Generell kann es günstig sein, wie auch bei diesem Beispiel, die elektromagnetische Strahlung auf der später benutzerabgewandten Seite einzustrahlen. Bei einem Glaskeramik-Kochfeld ist typischerweise eine Seite der Glaskeramikplatte genoppt und bildet die dem Benutzer abgewandte Seite oder die Unterseite des Kochfelds. Günstig ist die Einstrahlung auf die dem Benutzer abgewandten Seite, da die der Strahlungsquelle zugewandte Seite tendenziell wärmer wird und dies zu Oberflächenveränderungen führen kann. Solche Veränderungen sind auf der typischerweise genoppten benutzerabgewandten Seite weniger störend. Siliziumoxid-Keramikunterlage 7 und Glaskeramik-Kochfläche 1 sind auf Raumtemperatur. Über dieser Anordnung ist ein Laser-Scanner 13 mit einer fokussierenden Optik, Brennweite 250 mm, so installiert, dass der Laserstrahl 90 senkrecht zur Oberfläche der Glaskeramik-Kochfläche 1 auftrifft. Im Fokus beträgt der Durchmesser des Laserstrahls 90 1,5 mm. Die Anordnung aus Siliziumoxid-Keramikunterlage 7 und Glaskeramik-Kochfläche 1 wird in einer solchen Entfernung platziert, dass die Glaskeramik-Kochfläche 1 nicht im Fokus des Laserstrahls 90 liegt und der Laserstrahl mithin defokussiert ist. Im Ausführungsbeispiel weist der Laserstrahl 90 auf der Glaskeramik-Kochfläche 1 einen Durchmesser von 10 mm auf. Über eine Übertragungsfaser 11 wird dem Laserscanner 13 Laserstrahlung eines Lasers 9 mit einer Wellenlänge zwischen 900 nm und 1100 nm zugeführt. Als Laser 9 dient dabei ein Diodenlaser, beispielsweise der Firma laserline, die eine regelbare Leistung zwischen 0 W und 3000 W liefert. Nach Aktivierung des Lasers 9 wird die Glaskeramikplatte 1 mit einer Leistung von 1000W und einer Dauer von 10 Sekunden lokal bestrahlt. Die Glaskeramik heizt sich dadurch mit einer Rate von mehr als 250 K pro Minute auf, wobei innerhalb der Bestrahlungsdauer die Temperatur überschritten wird, bei welcher die Viskosität der Glaskeramik einen Wert von 10¹⁴ dPa·s aufweist. Danach wird der Laser abgeschaltet und die Glaskeramikplatte kühlt an Luft ab. Die so erzielte Abkühlrate liegt zumindest innerhalb eines Temperaturbereichs von der Maximaltemperatur bis 100 K unterhalb der Maximaltemperatur, vorzugsweise bis zur Temperatur, bei welcher die Viskosität der Glaskeramik einen Wert von 10¹⁴ dPa·s aufweist, bei mehr als 1 K pro Sekunde, im Allgemeinen sogar bei mehr als 5 K pro Sekunde oder mehr als 10 K pro Sekunde. Damit wird der Farbänderungs-, insbesondere hier der Aufhellungseffekt eingefroren. Im lokalen Bereich 15, welcher durch den Laserstrahl 90 erwärmt wurde, ist die Transmission lokal über die gesamte Dicke der Platte deutlich höher geworden, d.h. sichtbare Strahlung kann besser durch die Glaskeramik-Kochfläche 1 gelangen. Benachbarte Bereiche 16 der Platte, beziehungsweise der übrige Teil der Glaskeramik-Kochfläche 1 bleibt dunkel, d.h. behält seine geringe Transmission im sichtbaren Bereich. Die Glaskeramik-Kochfläche 1 ist außerdem geometrisch unverändert, insbesondere auch im Bereich 15 der Einstrahlung. Dies betrifft sowohl die Ebenheit als auch lokale Dickenschwankungen.

Mittels eines Laserscanners kann der Laserstrahl gemäß einer weiteren Ausführungsform auch über die Oberfläche der Glaskeramik-Kochfläche gerastert werden, so dass ein Bereich 15 aufgeheizt wird, dessen Oberfläche größer ist als der Lichtfleck des Laserstrahls auf der Oberfläche der Glaskeramik-Kochfläche.

Der erste Bereich 15 mit der gegenüber benachbarten Bereichen 16 höheren Transmission erstreckt sich von einer ersten bis zu einer zweiten, gegenüberliegenden Oberfläche der Glaskeramik-Kochfläche, beziehungsweise von deren Oberseite bis zur Unterseite. Dies wird durch das Durchdringen der elektromagnetischen Strahlung durch die Glaskeramik-Kochfläche und damit einer Aufheizung des gesamten Glaskeramikmaterials zwischen den beiden gegenüberliegenden Seiten erzielt.

Es ist aber auch möglich, eine Transmissionssteigerung zur Verbesserung der Sichtbarkeit von Anzeigen zu erzielen, wenn nicht das gesamte Volumen zwischen den beiden Oberflächen, sondern nur eine Schicht, etwa mit einer Schichtdicke entsprechend der halben Dicke der Glaskeramikplatte aufgehellt wird. Selbstverständlich können mit dem erfindungsgemäßen Verfahren allgemein auch mehrere Bereiche 15 im Glaskeramik-Kochfeld erzeugt werden.

In Weiterbildung der Erfindung wird die Glaskeramikplatte 1 optional während der Bestrahlung, beziehungsweise der Aufheizung gleichzeitig oberflächlich gekühlt. Dazu wird ein Kühlfluid 18 in Kontakt mit der Oberfläche der Glaskeramikplatte 1 gebracht. Das Kühlfluid 18 kann dabei auch über die Oberfläche der Glaskeramikplatte 1 fließen, um den Kühleffekt zu verstärken. Bei dem in Fig. 1 gezeigten Ausführungsbeispiel ist speziell ein Film des Kühlfluids 18 auf der bestrahlten zweiten Seite 5 der Glaskeramikplatte 1 vorgesehen. Dieser kann, beispielsweise indem die Seite 5 schräg angeordnet und/oder fortlaufend Kühlfluid 18 zugeführt wird, in einfacher Weise auch zum Fließen über die Oberfläche, beziehungsweise entlang der zweiten Seite 5 gebracht werden. Anders als in Fig. 1 gezeigt, kann auch eine Anordnung vorgesehen werden, bei welchem beide Seiten 3, 5 Kontakt mit einem Kühlfluid 18, vorzugsweise einem fließenden Kühlfluid 18 haben.

Geeignet ist ein Ethanol/Wasser-Gemisch. Allgemein, ohne Beschränkung auf das dargestellten Ausführungsbeispiel wird dabei bevorzugt, dass der Ethanol-Gehalt des Gemisches 50 Volumenprozent nicht übersteigt. Ein solches Gemisch ist von Vorteil, da dieses weniger Infrarotstrahlung absorbiert als reines Wasser. Mit dem Kühlfluid können Veränderungen der Oberfläche, wie Verwerfungen oder Aufwölbungen vermieden oder wenigstens reduziert werden. Auch können die Eigenschaften der Glaskeramikplatte 1 durch die gleichzeitige Kühlung während der Bestrahlung positiv beeinflusst werden. Es können gemäß noch einer Weiterbildung der Erfindung Druckspannungen an der Oberfläche erzeugt werden. Zumindest können auch hohe Zugspannungen an der Oberfläche nach dem Bestrahlen und Abkühlen verhindert oder verringert werden. Allgemein kann daher eine Glaskeramikplatte 1 hergestellt werden, bei welchem im erfindungsgemäß behandelten ersten Bereich 15 die Spannung an der Oberfläche niedriger ist, als in der Mitte des Volumens des ersten Bereichs 15. Der Begriff einer niedrigeren Spannung wird dabei nicht betragsmäßig, sondern mit Vorzeichen verstanden. So kann die Oberfläche nahezu spannungsfrei sein, während in der Mitte des Volumens eine Zugspannung, also eine Spannung mit positivem Vorzeichen vorliegt. Auch hierbei ist die Spannung an der Oberfläche niedriger, da die Spannung im Inneren positiv ist.

Für das Verfahren ist es in Weiterbildung der Erfindung generell, ohne Beschränkung auf das spezielle Ausführungsbeispiel der Fig. 1 günstig, wenn eine Einrichtung vorgesehen wird, welche die elektromagnetische Strahlung, die durch die Glaskeramikplatte 1 transmittiert ist, in die Glaskeramikplatte 1 zurückreflektiert. Insbesondere kann dazu die Glaskeramikplatte 1 auf einer Unterlage gelagert werden, welche die elektromagnetische Strahlung in die Glaskeramikplatte 1 zurückreflektiert. Durch die Reflexion kann die Effizienz und Geschwindigkeit des Aufheizvorgangs gesteigert und damit auch die Prozesszeit verkürzt werden. Wird, wie auch bei dem in Fig. 1 gezeigten Beispiel ein Infrarotlaser verwendet, kann insbesondere eine im Bereich der Laserstrahlung von 0,9 µm bis 1,1 µm Wellenlänge reflektierende Unterlage verwendet werden.

Wird, wie bei dem in Fig. 1 gezeigten Beispiel eine im Schlickerguss hergestellte Siliziumoxid-Keramikunterlage 7 eingesetzt, kann hierzu eine entsprechend feinkörnige Siliziumoxid-Keramik verwendet werden. Allgemein wird dabei ohne Beschränkung auf Siliziumoxid-Keramiken in Weiterbildung der Erfindung bevorzugt, wenn die mittlere Korngröße einer Keramik, vorzugsweise der genannten schlickergegossenen SiO₂-Keramik, die als Unterlage für die Glaskeramikplatte 1 verwendet wird, kleiner als die Wellenlänge der elektromagnetischen Strahlung ist. Damit wird eine starke Streuung der Strahlung an der Oberfläche der Unterlage 7 vermieden. Bei breitbandigen Strahlungsquellen sollte dann die mittlere Korngröße der Keramik kleiner als die Wellenlänge der maximalen spektralen Leistungsdichte der durch die Glaskeramikplatte 1 transmittierten Strahlung oder alternativ die mittlere Wellenlänge des Spektrums der durch die Glaskeramikplatte 1 transmittierten Strahlung sein.

Gemäß einer anderen Weiterbildung der Erfindung kann anstelle einer keramischen Oberfläche, wie etwa bei der in Fig. 1 gezeigten Ausführungsform verwendeten Siliziumoxid-Keramikunterlage 7, auch eine metallisch reflektierende Unterlage verwendet werden. Geeignet sind beispielsweise Aluminium oder poliertes Kupfer. Diese Ausführungsform kann selbstverständlich auch mit einer Keramik-Unterlage kombiniert werden, indem auf der Keramik-Unterlage 7 eine metallisch reflektierende Schicht oder Platte angeordnet wird.

An die Aufheizung und die damit bewirkte Farbänderung des Bereichs 15 und die nachfolgende Abkühlung kann sich optional ein thermischer Nachbehandlungsschritt anschließen, um Zugspannungen abzubauen. Bereits eine thermische Nachbehandlung bei einer Temperatur von 800°C und einer Haltezeit von 5 Minuten bewirkt bei einer Glaskeramikplatte 1 ein deutliches Absinken von Zugspannungen. Die Aufheizung im thermischen Nachbehandlungsschritt auf eine Entspannungstemperatur kann mittels eines Lasers, einer anderen elektromagnetischen Strahlungsquelle oder auch in einem geeigneten Ofen erfolgen. Bei einer Aufheizung mit elektromagnetischer Strahlung kann auch eine Strahlungsquelle verwendet werden, deren Strahlung stärker absorbiert wird, als die elektromagnetischen Strahlung zur Aufheizung im ersten, zur Aufhellung verwendeten Schritt. Damit wird insbesondere die Oberfläche des Glases oder der Glaskeramik aufgeheizt. An der Oberfläche vorhandene Zugspannungen sind hinsichtlich der Festigkeit der Glaskeramikplatte 1 besonders relevant.

Bei dem in Fig. 1 gezeigten Beispiel ist ein optionales Kühlfluid vorgesehen, um eine zu starke Aufheizung der Oberfläche zu vermeiden. Eine andere Maßnahme, um einen Temperaturgradienten derart zu erzeugen, dass die Oberfläche während der Bestrahlung kühler bleibt, als unter der Oberfläche liegende Bereiche der Glaskeramik, ist ein entsprechendes Temperatur-Startprofil der zu behandelnden Glaskeramikplatte. So können Temperatur-Startprofile mit geeignetem Gradienten über die Dicke der Glaskeramik durch Tiefkühlen und/oder Vorheizen erzeugt werden. Bei einem geeigneten Startprofil kann vor der eigentlichen Einwirkung der elektromagnetischen Strahlung insbesondere das Volumen bereits heißer gemacht werden, als die Oberfläche. Als Beispiel sei ein Vorwärmen der Glaskeramikplatte 1 mit Abschrecken der Oberflächen vor dem Einwirken der elektromagnetischen Strahlung genannt.

Gemäß noch einer Ausführungsform der Erfindung kann auch anders als in Fig. 1 gezeigt, der Laserstrahl 90 im Volumen der Glaskeramik fokussiert werden. Auf diese Weise können gegebenenfalls Druckspannungen an den Oberflächen des prozessierten Materials entstehen.

Generell kann das Glaskeramikmaterial vor oder nach erfolgter Farbänderung auch ertüchtigt werden. Dies kann durch thermisches oder chemisches Vorspannen zum gezielten Einbringen von oberflächennahen Druckspannungszonen erfolgen, so dass das Material eventuelle, durch den Prozess induzierte Zugspannungen erträgt bzw. kompensiert.

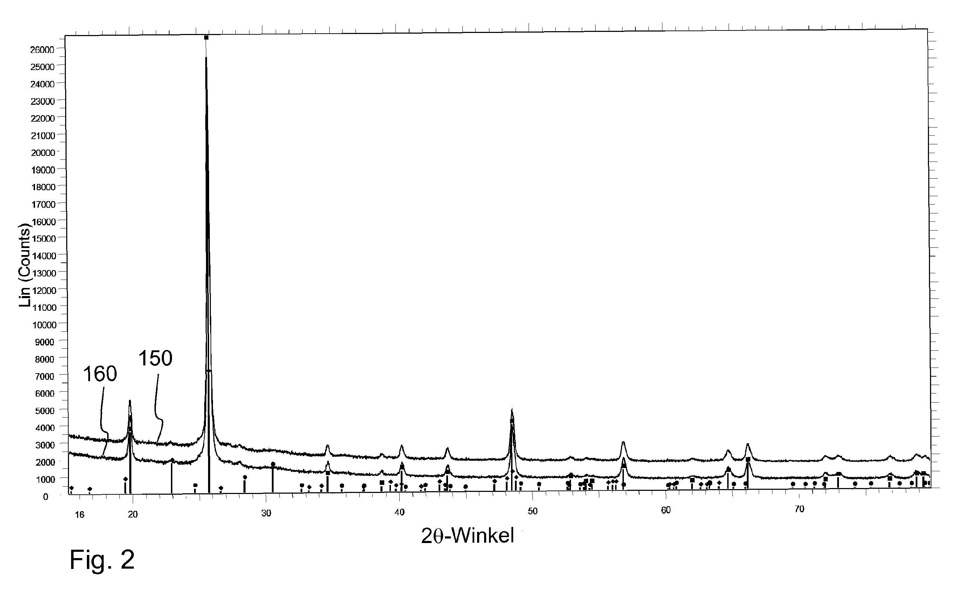

Fig. 2 zeigt Röntgenbeugungsspektren an einem monolithischen Glaskeramikelement, wie es mit dem anhand von Fig. 1 erläuterten Verfahren erhalten wird. Bei der untersuchten Glaskeramik handelt es sich um eine mit Vanadiumoxid volumengefärbte Lithium-Aluminosilikat-Glaskeramik, wie sie für Kochflächen eingesetzt wird. Mit der Röntgenbeugung wurden die Kristallphasen, der Kristallphasengehalt und die Kristallitgröße eines durch die Laserbestrahlung aufgehellten Bereichs 15 verglichen mit benachbarten, nicht aufgehellten Bereichen 16.

Zusätzlich mit einer Raute, einem Quadrat oder einem Kreis eingezeichnet sind die relativen Intensitäten verschiedener Kristallphasen. Mit den Quadraten sind dabei Röntgenbeugungs-Peaks von Hochquarz-Mischkristall (HQMK), mit Rauten die Röntgenbeugungs-Peaks von Lithium-Aluminosilikat, beziehungsweise Keatit-Mischkristall (KMK, LiAlSi₃O₈ ) und mit Kreisen die Röntgenbeugungs-Peaks des ebenfalls in der Glaskeramik nachgewiesenen Zirkontitanats (ZrTiO₄) gekennzeichnet. Die Kurve 150 ist dabei das Röntgenbeugungsspektrum am aufgehellten, also erfindungsgemäß behandelten Bereich 15 und die Kurve 160 das Röntgenbeugungsspektrum eines benachbarten, unveränderten Bereichs 16. Wie ersichtlich ist, sind die Kurven praktisch deckungsgleich, bis auf den aus Darstellungsgründen unterschiedlichen Offset. Bei genauerer Auswertung der Intensitäten der Röntgenbeugungspeaks ergibt sich als einziges ein sehr geringer Anstieg des Gehalts der Keatit-Mischkristallphase. Die Ergebnisse sind in der nachstehenden Tabelle nochmals zusammengefasst:

| Probe | Kristallitgröße [nm] [+/- 5%] | | HQMK-Phasen-gehalt [+/- 10%] | | KMK-Phasengehalt [+/- 10%] | |
|---|---|---|---|---|---|---|
| | HQMK | KMK | unkorrigiert | korrigiert | unkorrigiert | korrigiert |
| aufgehellter Bereich | 49 | Nicht bestimmbar | 54 | 66 | 3 | 3 |
| unveränderter Bereich | 48 | Nicht bestimmbar | 55 | 67 | 1 | 1 |

Für die Absorptionskorrekturen in den mit "korrigiert" bezeichneten Spalten wurde die chemische Zusammensetzung der Glaskeramik und eine angenommene Dichte von ρ=2.5g/cm³ verwendet.

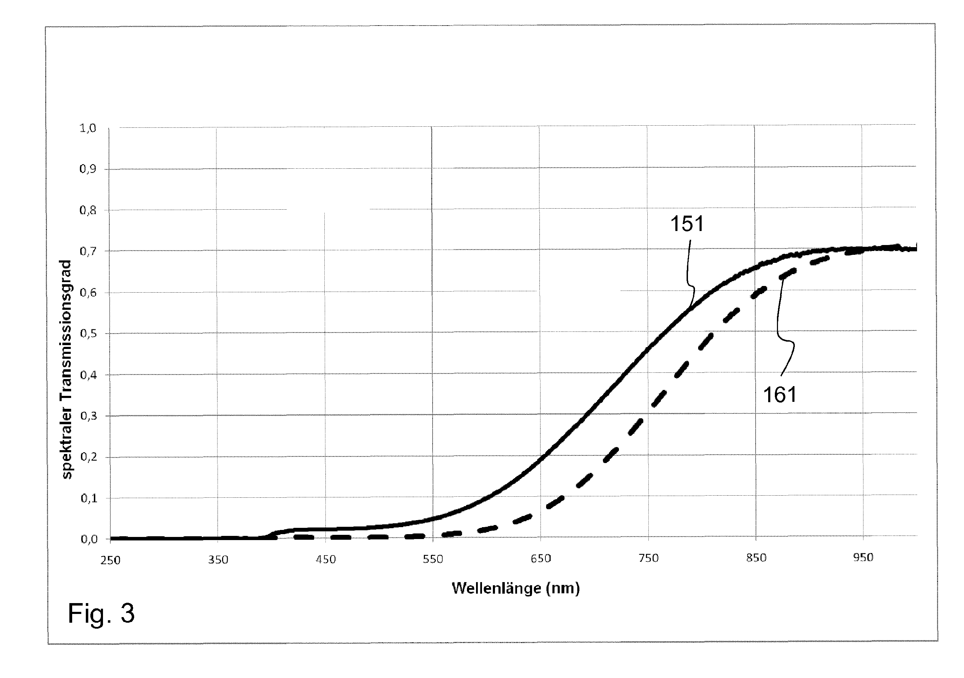

Der Phasengehalt des Hochquarz-Mischkristalls ändert sich nach obiger Tabelle und Fig. 3 demnach nicht innerhalb des Messfehlers. Nur der Keatit-Mischkristall-Gehalt zeigt eine Änderung, die sich aufgrund des geringen Anteils dieser Kristallphase nicht nennenswert auf das Gefüge der Glaskeramik auswirkt. Auch wenn behandelte und nicht behandelte Bereiche eines Glaskeramikelements damit also keine wesentlichen strukturellen Unterschiede aufweisen, kann ein erfindungsgemäß behandelter Bereich einer Aluminosilikat-Glaskeramik, insbesondere einer Lithium-Aluminosilikat-Glaskeramik gemäß einer Weiterbildung an einem höheren Gehalt an Keatit-Mischkristall gegenüber einem benachbarten, nicht behandelten Bereich erkannt werden.

Änderungen der Kristallphasen und/oder deren Anteile können die Lichtstreuung beeinflussen. Verändert sich die Lichtstreuung im Material, führt dies auch zu einer veränderten Remission beim Beleuchten des behandelten Bereiches. Wie an dem obigen Beispiel demonstriert, sind behandelte und unbehandelte Bereiche in ihrer Morphologie, insbesondere in Bezug auf die vorhandenen Kristallphasen praktisch identisch. Daher ändert sich auch die Remission bei einem erfindungsgemäßen Erzeugnis zwischen einem behandelten und einem unbehandelten Bereich nicht oder allenfalls sehr geringfügig. In Weiterbildung der Erfindung ist daher ohne Beschränkung auf das vorstehend erläuterte Ausführungsbeispiel vorgesehen, dass sich die Remission des ersten Bereichs für sichtbares Licht von der Remission des zweiten Bereichs um höchstens absolut 20 %, vorzugsweise um höchstens absolut 10 %, besonders bevorzugt um höchstens absolut 5 % unterscheidet. Auch die Lichtstreuung steigt im ersten Bereich, wenn überhaupt, dann allenfalls geringfügig um weniger als absolut 5% an.

Fig. 3 zeigt die spektralen Transmissionsgrade einer erfindungsgemäß behandelten, mit Vanadiumoxid volumengefärbten Glaskeramik-Platte als Funktion der Wellenlänge. Die Kurve 151 in Fig. 3 bezeichnet dabei den spektralen Transmissionsgrad eines erfindungsgemäß behandelten Bereichs 15, Kurve 161 den spektralen Transmissionsgrad eines benachbarten, unbehandelten Bereichs 16. Anhand der beiden Kurven wird ersichtlich, dass die spektrale Transmission im gesamten Spektralbereich zwischen 420 Nanometern und 780 Nanometern im behandelten Bereich 15 deutlich erhöht ist. Dies ist von Vorteil, wenn weniger der Farbton beeinflusst, sondern die Durchsicht verbessert werden soll, um etwa gezielt Bereiche des Glaskeramik-Kochfelds für leuchtende oder auch nicht leuchtende Anzeigeelemente durchsichtiger zu machen oder allgemein Fenster, insbesondere Sichtfenster einzufügen. Gemäß einer Weiterbildung der Erfindung und ohne Beschränkung auf das spezielle Ausführungsbeispiel ist im ersten Bereich daher die spektrale Transmission innerhalb des gesamten Spektralbereichs zwischen 420 Nanometern und 780 Nanometern höher als in einem benachbarten, zweiten Bereich.

Bemerkenswert am spektralen Transmissionsgrad gemäß Fig. 3 ist außerdem noch, dass die Transmission im blauen und grünen Spektralbereich relativ gesehen noch stärker ansteigt, als im roten Bereich. So steigt die Transmission bei 500 Nanometern von 0,0028 auf 0,027, also um einen Faktor von mehr als neun an. Bei 600 Nanometern ist der Faktor geringer und liegt hier bei 4,7. Gerade dies ist besonders günstig, um bei volumengefärbten, insbesondere mit Vanadiumoxid gefärbten Glaskeramiken die Anzeigefähigkeit für blaue und/oder grüne Anzeigeelemente oder für Farbdisplays zu verbessern. Gemäß noch einer Weiterbildung der Erfindung ist daher das Verhältnis der spektralen Transmissionsgrade von erstem zu zweiten Bereich bei einer Wellenlänge im Bereich von 400 bis 500 Nanometern größer als bei einer Wellenlänge im Bereich von 600 bis 800 Nanometern.

Nachfolgend sind die Farben, gemessen an den behandelten und unbehandelten Bereichen 15, 16 in Durchleuchtung der 4 mm dicken Glaskeramik-Platte für verschiedene Farbmodelle (xyY, Lab, Luv) und verschiedene Normlichtquellen aufgelistet:

### Normlichtart A

| | Bereich 16 | Bereich 15 |
|---|---|---|
| x | 0,6307 | 0,5782 |
| y | 0,3480 | 0,3805 |
| Y | 1,7 | 7,6 |

### Normlichtart D65

| | Bereich 16 | Bereich 15 |
|---|---|---|
| x | 0,5550 | 0,4773 |
| y | 0,3540 | 0,3752 |
| Y | 1,2 | 6,2 |
| Ra | -25,6 | 22,0 |

### Normlichtart C

| | Bereich 16 | Bereich 15 |
|---|---|---|
| x | 0,5545 | 0,4763 |
| y | 0,3495 | 0,3685 |
| Y | 1,2 | 6,3 |

| | | |
|---|---|---|
| Yellowness I. 174,0 120,8 | | |

### Normlichtart A

| Bereich 16 | | Bereich 15 |
|---|---|---|
| L* | 13,6 | 33,2 |
| a* | 23,2 | 24,2 |
| b* | 19,1 | 27,7 |
| C* | 30,0 | 36,8 |

### Normlichtart D65

| | Bereich 16 | Bereich 15 |
|---|---|---|
| L* | 10,6 | 30,0 |
| a* | 20,8 | 20,2 |
| b* | 13,8 | 22,9 |
| C* | 25,0 | 30,5 |

### Normlichtart C

| | Bereich 16 | Bereich 15 |
|---|---|---|
| L* | 10,8 | 30,2 |
| a* | 20,1 | 19,2 |
| b* | 14,1 | 23,2 |
| C* | 24,5 | 30,1 |

### Normlichtart A

| | Bereich 16 | Bereich 15 |
|---|---|---|
| L* | 13,6 | 33,2 |
| u* | 30,3 | 45,3 |
| v* | 0,9 | 4,3 |

### Normlichtart D65

| | Bereich 16 | Bereich 15 |
|---|---|---|
| L* | 10,6 | 30,0 |
| u* | 22,6 | 36,6 |
| v* | 7,0 | 18,5 |

### Normlichtart C

| | Bereich 16 | Bereich 15 |
|---|---|---|
| L* | 10,8 | 30,2 |
| u* | 22,9 | 36,7 |
| v* | 7,8 | 20,3 |

Bei den Farbmodellen Lab, xyY und Luv bezeichnen die Parameter L, beziehungsweise Y jeweils die Helligkeit. Der Parameter Y im xyY-Farbmodell korrespondiert dabei bei der Verwendung der Normlichtart C oder Normlichtart D65 zur Transmission τᵥᵢₛ im sichtbaren Spektralbereich und aus dem Vergleich der Y-Werte kann die Transmissionssteigerung ermittelt werden. Anhand der oben angegebenen Werte zeigt sich, dass die Transmission im sichtbaren Spektralbereich um mindestens einen Faktor 2,5 angehoben wird. Generell ist hierbei zu beachten, dass die Transmission auch vom Brechwert und der Dicke der durchleuchteten Glaskeramik-Kochfläche abhängt. Generell kann aber gesagt werden, dass gemäß einer Weiterbildung der Erfindung die Transmission im sichtbaren Spektralbereich zwischen 380 und 780 Nanometern bezogen auf eine Dicke von 4 Millimetern um mindestens einen Faktor 2,5 angehoben wird.

Die Einfärbung durch Vanadiumoxid, V₂O₅, wie sie auch bei den vorstehend besprochenen Ausführungsbeispielen der Fig. 2 und 3 vorlag, ist auch aus der DE 10 2008 050 263 B4 bekannt. Demnach stellt sich der Färbemechanismus als ein komplexer Prozess dar. Für die Überführung des Vanadiumoxids in den färbenden Zustand ist nach dieser Druckschrift ein Redoxvorgang Voraussetzung. Im kristallisierbaren Ausgangsglas färbt das V₂O₅ noch relativ schwach und führt zu einem leicht grünlichen Farbton. Bei der Keramisierung findet der Redoxvorgang statt, das Vanadium wird reduziert und der Redoxpartner wird oxidiert.

Als primärer Redoxpartner fungiert das Läutermittel, was sich aus Mössbauer-Untersuchungen an Sb- und Sn-geläuterten Zusammensetzungen ergibt. Beim Keramisieren wird ein Teil des Sb³⁺ bzw. Sn²⁺ im Ausgangsglas in die höhere Oxidationsstufe Sb⁵⁺ bzw. Sn⁴⁺ überführt. Es wurde angenommen, dass das Vanadium in reduzierter Oxidationsstufe als V⁴⁺ oder V³⁺ in den Keimkristall eingebaut wird und dort durch Elektronen-Charge-Transfer-Reaktionen intensiv färbt. Als weiterer Redoxpartner kann auch TiO₂ die Einfärbung durch Vanadiumoxid verstärken. Neben der Art und Menge der Redoxpartner im Ausgangsglas hat nach der DE 10 2008 050 263 B4 auch der Redoxzustand, welcher im Glas bei der Schmelze eingestellt wird einen Einfluss. Ein niedriger Sauerstoff-Partialdruck, also eine reduzierend eingestellte Schmelze, z. B. durch hohe Schmelztemperaturen, verstärkt die Farbwirkung des Vanadiumoxids.

Es ist aber auch möglich, dass das reduzierte V⁴⁺ oder V³⁺ nicht oder nicht ausschließlich in die Keimkristalle, sondern möglicherweise auch in eine andere struktuerelle Umgebung, etwa in den Hochquarz-Mischkristall oder in Cluster eingebaut wird.

Mit der Erfindung wird nun diese Einfärbung lokal durch die Einstrahlung hochenergetischer Strahlung und Erwärmung der Glaskeramik verändert.

Dies kann mit der Beeinflussung des farbgebenden Charge-Transfer-Prozesses in Verbindung gebracht werden. Da der hypothetische Elektronentransfer zwischen Donator- und Akzeptorzentren beim Charge Transfer für die Absorption maßgeblich ist, ist anzunehmen dass durch die einwirkende hochenergetische Strahlung und Aufheizung hier eine strukturelle Änderung an den Zentren erfolgt. Diese strukturelle Änderung vermindert die Häufigkeit/Wahrscheinlichkeit der Elektronentransfer-Übergänge und damit die Absorption.

Wegen der Sensibilität, mit der die Vanadin-Einfärbung auf Sauerstoff-Partialdruck und Redoxprozesse bei der Keramisierung reagiert, können hierfür konkurrierende Wertigkeitswechsel in Frage kommen. Das heißt, die Strahlung in Verbindung mit der Erwärmung kann Elektronen von den Donator- oder Akzeptorzentren möglicherweise entfernen und diese damit für den Charge Transfer Prozess passivieren.

Die Beobachtung dass sich die verminderte Einfärbung durch thermische Behandlung wieder rückgängig machen lässt unterstützt die Hypothese. Die thermodynamisch stabilere strukturelle Situation der Zentren lässt sich wiederherstellen. Damit wird die Häufigkeit der farbgebenden Charge-Transfer-Übergänge wieder erhöht.

Fig. 4 zeigt ein Glaskeramik-Kochfeld 20 als eine der bevorzugten Anwendungen der Erfindung. Das Glaskeramik-Kochfeld 20 umfasst eine Glaskeramik-Kochfläche 1 in Form einer Glaskeramikplatte mit einer ersten Seite 3, welche hier die Oberseite bildet, sowie einer gegenüberliegenden zweiten Seite, welche die Unterseite bildet. Unter der Unterseite, beziehungsweise der zweiten Seite 5 ist ein Heizelement 22 angeordnet, um ein auf die erste Seite 3 über das Heizelement 22 gestelltes Gargefäß zu erhitzen. Die Glaskeramik-Kochfläche 1 weist einen ersten Bereich 15 auf, welcher sich durch die Glaskeramik-Kochfläche 1 von einer zur gegenüberliegenden Oberfläche der beiden Seiten 3, 5 erstreckt und in welchem die Lichttransmission gegenüber benachbarten Bereichen 16 erhöht ist. Unter dem ersten Bereich 15 ist eine vorzugsweise selbstleuchtende Anzeigeeinrichtung 23 angeordnet, deren Licht durch den ersten Bereich 15 hindurch sichtbar ist. Der erste Bereich 15 wird dabei durch die erfindungsgemäße Behandlung mit einem Laser oder einer anderen lokal einwirkenden elektromagnetischen Strahlungsquelle, Aufheizung und anschließendes Abkühlen erzeugt. Um zu vermeiden, dass die unter der Glaskeramik-Kochfläche 1 angeordneten Teile, wie etwa das Heizelement 22 bei Betrachtung der Oberseite 3 sichtbar sind, kann eine volumengefärbte Glaskeramik, etwa mit einem Vanadiumoxid-Gehalt von mehr als 0,02 Gewichtsprozent verwendet werden. Durch die lokale Abschwächung der Absorption, beziehungsweise lokale Aufhellung der Glaskeramik im Bereich 15 kann dennoch das Licht der Anzeigeeinrichtung durch die Glaskeramikplatte transmittiert werden und ist für die Bedienperson gut sichtbar.

Da mit der Erfindung sehr deutliche Aufhellungen erzielt werden können, eignet sich das Verfahren besonders auch für dunkle Glaskeramik-Kochflächen, um diese für Anzeigen lichtdurchlässig zu machen. Ohne Beschränkung auf das Ausführungsbeispiel ist daher gemäß einer Ausführungsform der Erfindung vorgesehen, dass eine Glaskeramik-Kochfläche verwendet wird, bei welcher die integrale Lichttransmission im sichtbaren Spektralbereich des zweiten, zum ersten Bereich 15 benachbarten Bereichs 16 höchstens 5%, bevorzugt höchstens 2,5% beträgt. Mit anderen Worten weist die Glaskeramikplatte, welche das Ausgangsmaterial für die Kochfläche bildet, eine entsprechend niedrige Transmission von höchstens 5%, bevorzugt höchstens 2,5% auf.

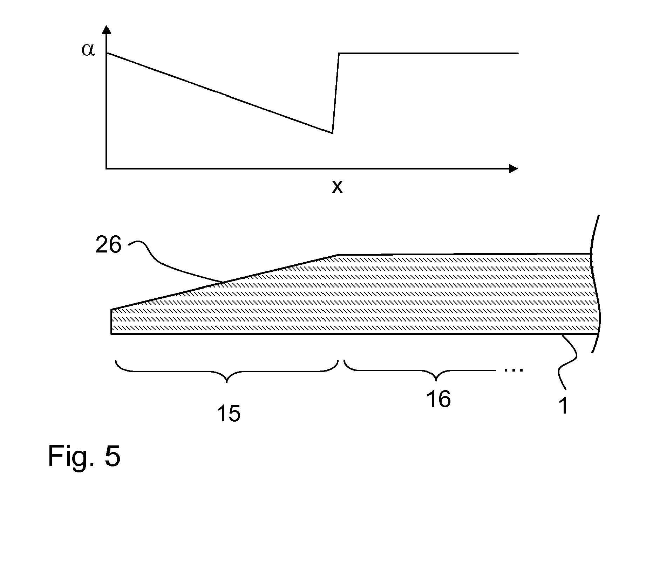

Anzeigeeinrichtungen können auch unter einer Flachfacette angeordnet sein. Ein Beispiel einer Glaskeramikplatte 1 mit einer solchen Flachfacette 26 zeigt Fig. 5. Wenn nun etwa wie bei dem in Fig. 4 gezeigten Beispiel eine Anzeigeeinrichtung unter der Flachfacette 26 angeordnet werden soll, ergibt sich bei volumengefärbten Glaskeramiken das Problem, dass aufgrund der variierenden Dicke des Materials im Bereich der Flachfacette 26 die Lichttransmission ebenfalls entlang der Oberfläche variiert. Die Erfindung bietet hier nun generell die Möglichkeit, Transmissionsänderungen bei variierenden Dicken des Glaskeramikmaterials auszugleichen. Dazu kann dickenabhängig die Behandlungsdauer und/oder die Leistung der eingestrahlten elektromagnetischen Strahlung entsprechend variiert werden. Oberhalb der Glaskeramikplatte 1 ist dazu in Fig. 5 schematisch ein Verlauf des Absorptionskoeffizienten a als Funktion der Ortskoordinate x entlang der Oberfläche der Glaskeramikplatte 1 aufgetragen. Die Flachfacette 26 geht hier vom Rand der Glaskeramikplatte aus, wo die Glaskeramikplatte 1 dementsprechend die niedrigste Dicke und damit ohne erfindungsgemäße Behandlung die höchste Transmission aufweist. Um nun die Transmission entlang der Flachfacette 26 konstant zu halten, wird der Absorptionskoeffizient α vom Rand ausgehend bis zur innenseitigen Kante der Flachfacette 26 graduell abgesenkt. Der mit der Flachfacette 26 versehene Bereich bildet damit auch den ersten Bereich 15, in welchem die Färbung sich von einem zweiten, benachbarten Bereich 16 neben der Flachfacette 26 (also der Bereich mit planparallelen Seitenflächen) unterscheidet.

Die Lichttransmission bleibt damit entlang der Flachfacette 26 konstant auf dem Wert am Rand der Platte. Der Absorptionskoeffizient kann dann an der innenseitigen Kante der Flachfacette 26 schnell wieder auf den Wert der unbehandelten Glaskeramik angehoben werden. Der Verlauf des Absorptionskoeffizienten zeigt daher hier eine Stufe. Die Flachfacette 26 erscheint damit als gleichmäßig aufgehellter Bereich. Ohne Beschränkung auf den speziellen, in Fig. 5 gezeigten Anwendungsfall kann daher ein Glas- oder Glaskeramikelement mit entlang zumindest eines Bereichs der Oberfläche variierender Dicke vorgesehen werden, bei welchem der Absorptionskoeffizient durch die erfindungsgemäße Behandlung, also im ersten Bereich 15 abhängig von der Dicke lokal variiert wird, insbesondere, so dass eine durch die variierende Dicke sich lokal ändernde Lichttransmission zumindest teilweise ausgeglichen wird. Dazu wird mit steigender Dicke insbesondere ein kleinerer Absorptionskoeffizient eingestellt.

Bei dem Ausführungsbeispiel der Fig. 4 stellt der aufgehellte erste Bereich 15 ein lokal begrenztes Fenster dar, welches sich typischerweise nur über einen kleinen Teil der Fläche der Seite 3 erstreckt. Auch eine Flachfacette 26, wie sie das Beispiel der Fig. 5 zeigt, erstreckt sich typischerweise nicht über einen großen Teil der Seite 3. Gemäß einer Ausführungsform der Erfindung nimmt daher der Flächenanteil des oder der ersten Bereiche 15 an einer Seite der Glaskeramik-Kochfläche zusammengenommen höchstens ein Drittel der Fläche dieser Seite 3 ein.

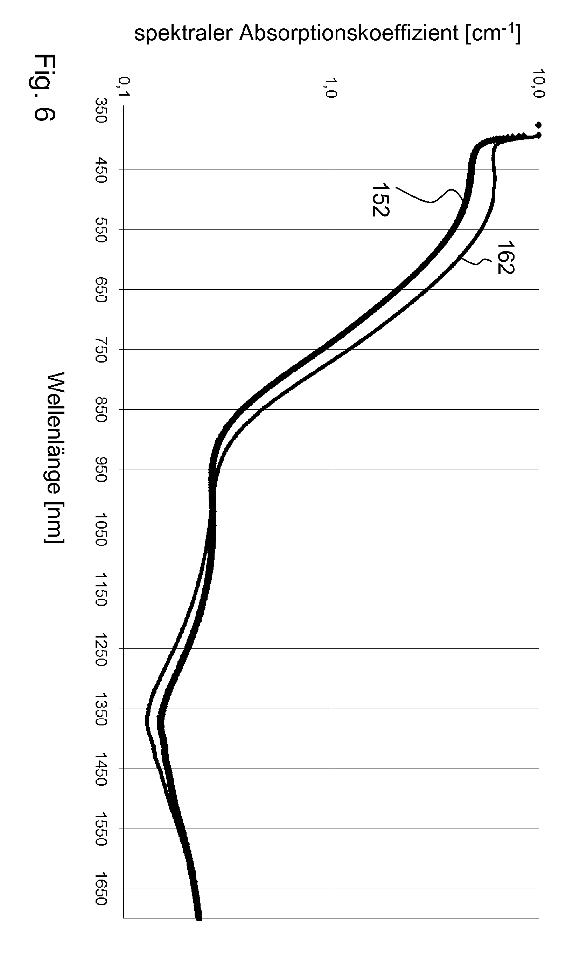

In Fig. 6 ist ein Diagramm mit dem Verlauf der gemessenen Absorptionskoeffizienten eines erfindungsgemäß aufgehellten und eines unbehandelten Bereichs als Funktion der Wellenlänge gezeigt. Wie auch bei dem in Fig. 3 gezeigten Verlauf der Lichttransmission ist die Glaskeramik, an welcher der Verlauf gemessen wurde, mit Vanadiumoxid gefärbt. Die höhere Lichttransmission eines aufgehellten Bereichs 15 zeigt sich hier nun daran, dass der spektrale Absorptionskoeffizient 152 eines aufgehellten Bereichs im sichtbaren Spektralbereich kleiner ist, als der Absorptionskoeffizient 162 eines benachbarten, nicht aufgehellten Bereichs 16. Insbesondere kann der Absorptionskoeffizient der Glaskeramik eines aufgehellten Bereichs 15, wie auch bei dem in Fig. 6 gezeigten Beispiel, im gesamten sichtbaren Spektralbereich kleiner sein, als der Absorptionskoeffizient des Materials eines benachbarten, nicht aufgehellten Bereichs 16. Der Absorptionskoeffizient sinkt im sichtbaren Spektralbereich mit steigender Wellenlänge. Entsprechend steigt die spektrale Lichttransmission ähnlich zu dem in Fig. 3 gezeigten Beispiel an.

Weiterhin fällt auf, dass sich die Verläufe der spektralen Absorptionskoeffizienten 152, 162 im Infrarot-Spektralbereich bei etwa 1000 Nanometern Wellenlänge überkreuzen. Ab dieser Wellenlänge ist nun der Absorptionskoeffizient des ersten Bereiches 15 größer als der Absorptionskoeffizient eines benachbarten zweiten Bereichs 16.

Bei dem gezeigten Beispiel ist dabei der Absorptionskoeffizient des ersten Bereichs 15 im Infraroten bis zu einer Wellenlänge von 1650 Nanometern größer, als im zweiten Bereich 16.

Allgemein, ohne Beschränkung auf das in Fig. 6 gezeigten Ausführungsbeispiel ist also gemäß einer Ausführungsform der Erfindung vorgesehen, dass der Absorptionskoeffizient des ersten Bereichs 15 in zumindest einem Spektralbereich mit einer Wellenlänge größer als 900 Nanometer größer als der Absorptionskoeffizient eines zweiten, benachbarten Bereichs 16 und damit die integrale Lichttransmission des ersten Bereichs 15 in dem Spektralbereich mit einer Wellenlänge größer als 900 Nanometer kleiner ist, als die integrale Lichttransmission des zweiten, benachbarten Bereichs 16 in diesem Spektralbereich. Vorzugsweise liegt der genannte Spektralbereich mindestens zwischen 1100 Nanometern und 1400 Nanometern, was auch für das dargestellte Ausführungsbeispiel der Fig. 6 gilt.

Der genannte Spektralbereich gilt insbesondere für mit Vanadiumoxid-gefärbte Glaskeramiken. Auch bei Färbung mit Seltene Erden, insbesondere Cer, vorzugsweise zusammen mit Chrom und/oder, Nickel und/oder Kobalt, mit Mangan, vorzugsweise zusammen mit Zinn und/oder Titan, oder mit Eisen, vorzugsweise zusammen mit Zinn und/oder Titan kann dieser Effekt eines im ersten Bereich 15 höheren Absorptionskoeffizienten im Infrarot-Spektralbereich auftreten. Gegebenenfalls unterscheidet sich aber der Wellenlängenbereich von dem in Fig. 6 gezeigten Beispiel.

Der im infraroten Spektralbereich höhere Absorptionskoeffizient des ersten Bereichs 15 kann insbesondere vorteilhaft für eine unter dem Bereich 15 einer Glaskeramikplatte angeordnete Anzeigeeinrichtung 23 sein. Damit wird die Gefahr verringert, dass beispielsweise durch Hitzequellen auf dem Kochfeld die Anzeigeeinrichtung durch die Glaskeramik hindurch zu sehr aufgeheizt und beschädigt wird.

Es ist dem Fachmann ersichtlich, dass die Erfindung nicht auf die beschriebenen Ausführungsbeispiele beschränkt ist, sondern im Rahmen des Gegenstands der Patentansprüche vielfältig variiert werden kann. So kommen neben einem Laser auch andere Strahlungsquellen in Betracht. Beispielsweise kann eine Hochleistungs-Kurzbogenlampe verwendet werden. Um eine lokal begrenzte Einwirkung des Lichts zu erzielen kann dazu die Glaskeramik-Kochfläche geeignet maskiert werden. Ebenfalls möglich ist die Verwendung einer Mikrowellen-Quelle mit geeigneter Maskierung.

### Bezugszeichenliste

- 1: Glaskeramik-Kochfläche
- 3: erste Seite von 1
- 5: zweite Seite von 1
- 7: Siliziumoxid-Keramikunterlage
- 9: Laser
- 11: Übertragungsfaser
- 13: Laserscanner
- 15: lokaler Bereich mit veränderter Transmission
- 16: Bereich mit unveränderter Transmission
- 18: Kühlfluid
- 20: Glaskeramik-Kochfeld
- 22: Heizelement
- 23: Anzeigeeinrichtung
- 26: Flachfacette
- 90: Laserstrahl
- 150: Röntgenbeugungsspektrum von 15
- 160: Röntgenbeugungsspektrum von 16
- 151: spektraler Transmissionsgrad von 15
- 161: spektraler Transmissionsgrad von 16
- 152: spektraler Absorptionskoeffizient von 15
- 162: spektraler Absorptionskoeffizient von 16

## Patentansprüche

1. Volumengefärbte, monolithische Glaskeramik-Kochfläche, welche einen ersten Bereich (15) aufweist, in welchem die Färbung der Glaskeramik sich von einem zweiten, benachbarten Bereich (16) unterscheidet, so dass der Absorptionskoeffizient des ersten Bereichs (15) kleiner als der Absorptionskoeffizient eines zweiten, benachbarten Bereichs (16) und damit die integrale Lichttransmission im sichtbaren Spektralbereich des ersten Bereichs (15) höher ist, als die integrale Lichttransmission des zweiten, benachbarten Bereichs (16), wobei die Lichtstreuung in der Glaskeramik des ersten Bereichs (15) höchstens um absolut 20 Prozent, vorzugsweise höchstens um absolut 5 Prozent gegenüber der Lichtstreuung in der Glaskeramik des zweiten Bereichs (16) erhöht ist.

2. Glaskeramik-Kochfläche gemäß dem vorstehenden Anspruch, wobei die Glaskeramik Ionen zumindest eines der folgenden Metalle oder Kombinationen von Ionen der folgenden Metalle enthält:
- Vanadium, insbesondere zusammen mit Zinn und/oder Titan
- Seltene Erden, insbesondere Cer, vorzugsweise zusammen mit Chrom und/oder, Nickel und/oder Kobalt,
- Mangan, vorzugsweise zusammen mit Zinn und/oder Titan,
- Eisen, vorzugsweise zusammen mit Zinn und/oder Titan.

3. Glaskeramik-Kochfläche gemäß dem vorstehenden Anspruch, **gekennzeichnet durch** ein mit Vanadiumoxid volumengefärbtes Glaskeramikelement, bei welchem im ersten Bereich (15) die integrale Lichttransmission im sichtbaren Spektralbereich gegenüber einem benachbarten zweiten Bereich (16) angehoben ist.

4. Glaskeramik-Kochfläche gemäß dem vorstehenden Anspruch, **dadurch gekennzeichnet, dass** die Glaskeramik zumindest 0,005, vorzugsweise zumindest 0,01 Gewichtsprozent Vanadiumoxid enthält.

5. Glaskeramik-Kochfläche gemäß einem der vorstehenden Ansprüche, **dadurch gekennzeichnet, dass** die integrale Lichttransmission im sichtbaren Spektralbereich des zweiten, zum ersten Bereich (15) benachbarten Bereichs (16) höchstens 5%, bevorzugt höchstens 2,5% beträgt.

6. Glaskeramik-Kochfläche gemäß einem der vorstehenden Ansprüche, **dadurch gekennzeichnet, dass** sich der erste Bereich (15) von einer ersten Oberfläche (3) bis zu einer zweiten, gegenüberliegenden Oberfläche (5) der Glaskeramik-Kochfläche erstreckt.

7. Glaskeramik-Kochfläche gemäß einem der vorstehenden Ansprüche, aus Aluminosilikat-Glaskeramik, vorzugsweise aus Lithium-Aluminosilikat-Glaskeramik, **dadurch gekennzeichnet, dass** der erste Bereich (15) einen höheren Gehalt an Keatit-Mischkristall als der zweite, benachbarte Bereich (16) aufweist.

8. Glaskeramik-Kochfläche gemäß einem der vorstehenden Ansprüche, **dadurch gekennzeichnet, dass** sich die Remission des ersten Bereichs für sichtbares Licht von der Remission des zweiten Bereichs um höchstens absolut 20 %, vorzugsweise um höchstens absolut 10 %, besonders bevorzugt um höchstens absolut 5 % unterscheidet.

9. Glaskeramik-Kochfläche gemäß einem der vorstehenden Ansprüche, **dadurch gekennzeichnet, dass** im ersten Bereich (15) die spektrale Transmission innerhalb des gesamten Spektralbereichs zwischen 420 Nanometern und 780 Nanometern höher als in einem benachbarten, zweiten Bereich (16) ist.

10. Glaskeramik-Kochfläche gemäß einem der vorstehenden Ansprüche, **dadurch gekennzeichnet, dass** die integrale Transmission im sichtbaren Spektralbereich im ersten Bereich gegenüber dem zweiten, benachbarten Bereich um mindestens einen Faktor 2 erhöht ist, vorzugsweise, wobei die integrale Transmission des ersten Bereichs (15) im sichtbaren Spektralbereich um absolut mindestens 3 % höher ist, als die integrale Transmission des zweiten Bereichs (16).

11. Glaskeramik-Kochfläche gemäß einem der vorstehenden Ansprüche, **dadurch gekennzeichnet, dass** die Fläche des ersten Bereichs (15) kleiner ist, als die Fläche des zweiten Bereichs (16).

12. Glaskeramik-Kochfläche gemäß einem der vorstehenden Ansprüche, **dadurch gekennzeichnet, dass** im ersten Bereich (15) die Spannung an der Oberfläche niedriger ist, als in der Mitte des Volumens des ersten Bereichs (15).

13. Glaskeramik-Kochfläche gemäß einem der vorstehenden Ansprüche, **gekennzeichnet durch** eine entlang zumindest eines Bereichs der Oberfläche variierende Dicke, wobei der Absorptionskoeffizient abhängig von der Dicke lokal variiert.

14. Glaskeramik-Kochfläche gemäß einem der vorstehenden Ansprüche, **dadurch gekennzeichnet, dass**
- der erste Bereich (15) ein Fenster ist, welches von mindestens drei Seiten oder zu mindestens 50% seines Umfangs von benachbarten, nicht aufgehellten zweiten Bereichen umgeben ist, oder dass
- der Flächenanteil des oder der ersten Bereiche (15) an einer Seite (3) der Glaskeramik-Kochfläche zusammengenommen höchstens ein Drittel der Fläche dieser Seite einnimmt.

15. Glaskeramik- Kochfläche gemäß einem der vorstehenden Ansprüche, **dadurch gekennzeichnet, dass** der Absorptionskoeffizient des ersten Bereichs (15) in zumindest einem Spektralbereich mit einer Wellenlänge größer als 900 Nanometer, vorzugsweise im Bereich von 1100 Nanometern bis 1400 Nanometern, größer als der Absorptionskoeffizient eines zweiten, benachbarten Bereichs (16) und damit die integrale Lichttransmission des ersten Bereichs (15) in dem Spektralbereich mit einer Wellenlänge größer als 900 Nanometer kleiner ist, als die integrale Lichttransmission des zweiten, benachbarten Bereichs (16) in diesem Spektralbereich.

16. Verfahren zur Herstellung einer Glaskeramik-Kochfläche mit lokal veränderter Transmission, bei welchem
- eine mit färbenden Metallionen volumengefärbte Glaskeramikplatte bereitgestellt und
- lokal begrenzt auf einen Bereich der Oberfläche der Glaskeramikplatte elektromagnetische Strahlung gerichtet wird, welche im Volumen der Glaskeramikplatte absorbiert wird, und
- wobei die Leistungsdichte der elektromagnetischen Strahlung so gewählt wird, dass sich der bestrahlte Bereich der Glaskeramikplatte aufheizt, wobei mindestens so lange aufgeheizt wird, bis im Volumen des erhitzten Bereichs die Transmission des Glaskeramikmaterials in zumindest einem spektralen Bereich innerhalb des sichtbaren Spektralbereichs zwischen 380 Nanometern und 780 Nanometern Lichtwellenlänge erhöht wird, und wobei
- die Einstrahlung der elektromagnetischen Strahlung nach der Aufheizung beendet wird und der bestrahlte Bereich abkühlt.

17. Verfahren gemäß dem vorstehenden Anspruch, **dadurch gekennzeichnet dass** die Aufheizung mit einem Laser (9) erfolgt.

18. Verfahren gemäß dem vorstehenden Anspruch, **dadurch gekennzeichnet, dass** mittels eines Laserscanners der Laserstrahl über die Oberfläche der Glaskeramik-Kochfläche gerastert wird, so dass ein Bereich aufgeheizt wird, dessen Oberfläche größer ist als der Lichtfleck des Laserstrahls auf der Oberfläche der Glaskeramik-Kochfläche.

19. Verfahren gemäß einem der vorstehenden Ansprüche, wobei eine mit Vanadiumoxid volumengefärbte Glaskeramik-Kochfläche bereitgestellt und wobei in dem lokalen Bereich die Transmission im sichtbaren Spektralbereich zwischen 380 Nanometern und 780 Nanometern durch die Erhitzung angehoben wird.

20. Verfahren gemäß einem der vorstehenden Ansprüche, **dadurch gekennzeichnet, dass** die Glaskeramik nach der Aufheizung mit einer Abkühlrate von mindestens 1 K pro Sekunde, vorzugsweise zumindest 5 K pro Sekunde, besonders bevorzugt zumindest 10 K pro Sekunde zumindest innerhalb eines Temperaturbereichs von der Maximaltemperatur bis 100 K unterhalb der Maximaltemperatur abgekühlt wird.

21. Verfahren gemäß einem der vorstehenden Ansprüche, **dadurch gekennzeichnet, dass** die Glaskeramik mit einer Temperaturänderungsrate von mindestens 250 K pro Minute aufgeheizt wird.

22. Verfahren gemäß einem der vorstehenden Ansprüche, **dadurch gekennzeichnet, dass** mittels einer Einrichtung, vorzugsweise einer Unterlage, auf welcher die Glaskeramikplatte (1) gelagert wird, die elektromagnetische Strahlung, die durch die Glaskeramikplatte (1) transmittiert ist, in die die Glaskeramikplatte (1) zurückreflektiert wird.

23. Verfahren gemäß einem der vorstehenden Ansprüche, **dadurch gekennzeichnet, dass** die Oberfläche der Glaskeramikplatte (1) während der Einwirkung der elektromagnetischen Strahlung mit einem Kühlfluid (18) gekühlt wird.

24. Verfahren gemäß einem der vorstehenden Ansprüche, **dadurch gekennzeichnet, dass** ein thermischer Nachbehandlungsschritt nach der Abkühlung durchgeführt wird, insbesondere, um Zugspannungen abzubauen, wobei der thermische Nachbehandlungsschritt vorzugsweise zumindest eine der Schritte umfasst:
- einen zweiten Aufheizschritt mittels elektromagnetischer Strahlung
- ein thermisches Nachwärmen und Entspannen in einem Ofen.

25. Glaskeramik-Kochfeld (20) mit einer Glaskeramik-Kochfläche gemäß einem der vorstehenden Ansprüche wobei die Glaskeramik-Kochfläche (1) einen ersten Bereich (15) aufweist, welcher sich durch die Glaskeramik-Kochfläche von einer zur gegenüberliegenden Oberfläche der beiden Seiten (3,5) erstreckt und in welchem die integrale Lichttransmission gegenüber einem benachbarten Bereich (16) erhöht ist, und wobei unter dem ersten Bereich eine Anzeigeeinrichtung angeordnet ist, deren Licht durch den ersten Bereich (15) hindurch sichtbar ist.

26. Glaskeramik-Kochfeld (20) gemäß dem vorstehenden Anspruch, , wobei
- der erste Bereich (15) ein Fenster ist, welches von mindestens drei Seiten oder zu mindestens 50% seines Umfangs von benachbarten, nicht aufgehellten zweiten Bereichen umgeben ist, oder
- wobei der Flächenanteil des oder der ersten Bereiche (15) an einer Seite der Glaskeramik-Kochfläche zusammengenommen höchstens ein Drittel der Fläche dieser Seite einnimmt.
